(19) **Europäisches Patentamt / European Patent Office / Office européen des brevets**

(11) **EP 1 659 367 B1**

(12) **EUROPEAN PATENT SPECIFICATION**

(45) Date of publication and mention
of the grant of the patent:
**03.09.2008 Bulletin 2008/36**

(51) Int Cl.:
**G01C 21/26** *(2006.01)*  **B60K 31/00** *(2006.01)*

(21) Application number: **04027568.7**

(22) Date of filing: **19.11.2004**

(54) **Vehicle navigation with integrated curve warning using clothoid models**

Fahrzeugnavigation mit integrierter Kurvenwarnung basiert auf Klothoiden

Navigation d'un véhicule pour l'avertissement intégré de virages basé sur les modèles clothoides

(84) Designated Contracting States:
**AT BE BG CH CY CZ DE DK EE ES FI FR GB GR HU IE IS IT LI LU MC NL PL PT RO SE SI SK TR**

(43) Date of publication of application:
**24.05.2006 Bulletin 2006/21**

(73) Proprietor: **Harman Becker Automotive Systems GmbH**
**76307 Karlsbad (DE)**

(72) Inventor: **Nagel, Philipp Harald**
**21220 Seevetal (DE)**

(74) Representative: **Grünecker, Kinkeldey, Stockmair & Schwanhäusser**
**Anwaltssozietät**
**Leopoldstrasse 4**
**80802 München (DE)**

(56) References cited:
**EP-A- 0 543 543**     **DE-A1- 4 201 142**
**DE-A1- 10 244 329**     **US-A- 6 141 617**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of Invention**

The present invention relates to a navigation system for a vehicle. In particular, it relates to a navigation system with an integrated curve warning means and a method for curve warning.

**Prior Art**

The use of navigation systems in vehicles becomes increasingly prevalent. Usually on board navigation computer systems analyze the combined data provided by GPS (Global Positioning System), motion sensors as ABS wheel sensors as well as a digital map and thereby determine the current position and velocity of a vehicle with increasing preciseness.

Known navigation systems typically use electronic maps to represent cartographic features, as streets, buildings and rivers, and make use of a medium such as a compact disk or a digital video disc to store the data that relates to the cartographic features. After map matching the current position of the user is indicated in the digital map. Route guidance to the predetermined destination is performed acoustically and/or visually by means of a display device.

In conventional electronic maps cartographic features are represented by sets of points that are connected by straight lines. Since in reality streets or roads are constructed by means of smooth curves, the digital navigation maps display the graphical information of the road geometry in a somewhat inaccurate way. One should note that increasing the number of straight lines in order to improve the resolution would result in a drastic increase of the amount of data to be stored and processed.

The information gathered by the navigation system in digital form, besides for navigating, can also be used to improve the overall safety of the passengers. One important safety aspect is the warning of a driver, if he approaches or is currently passing a curve with a velocity too high to guarantee save complete passage of the curve.

However, previous solutions for curve warning devices suffer from inaccuracies in the map data (US 5,661,650; US 6,092,014; US 6,141,617). Since in conventional electronic maps the curve parameters are not sufficiently well modeled and resolved, existing curve warning systems utilizing digital map information cannot be regarded as being sufficiently reliable.

A higher resolution would, in principle, increase the sensibility of a curve warning system, but the limitations of storage and computer power do not allow for the employment of a sufficient resolution for all curves in a digital map database.

DE 102 44 329 A1 discloses a sensor apparatus for a vehicle that makes use of geographic data comprising curves represented by clothoid models that might be employed in curve warning systems.

**Description of the invention**

It is therefore the problem underlying the present invention to provide the driver with a navigation system with an integrated reliable curve warning means that overcomes the above-mentioned drawbacks.

The problem is solved by navigation systems for a vehicle according to claims 1 and 2 and methods for curve warning according to claims 12 and 13.

By the term "clothoid model" the parameters of a curve and the unique functional dependence of the parameters of a curve constructed by means of clothoids, i.e. the arc length, the radius, the tangent angle, the clothoid parameter and the curvature, on each other is to be understood. To be more specific, clothoids are geometric curves that represent a sub-class of cycloids and are characterized by a curvature C that is proportional to the arc length L: $C = L / A^2$ where $A$ is commonly referred to as the clothoid parameter $A$.

Vehicle navigation systems usually comprise digital map databases, in particular, including digital representations of curves. According to the present invention each of these curves is related to a clothoid model. For example, one database comprising curves and the respective clothoid parameters and additional curve parameters may be provided. Alternatively, two physically and/or logically separated databases may be provided: A first map database which includes the curves in a digital map and a second one clothoid database that includes clothoid models for these curves. The curves can be mapped to the parameter sets that constitute the clothoid models by some references included in the map database, for example.

The clothoid parameters $A$ that uniquely characterize individual clothoid curves of arbitrary radius may be stored in the map database. A central processor unit (CPU) of the navigation system can download the clothoid parameters of a curve that is approached or passed by the vehicle, and may calculate the curve parameters by means of the clothoid parameters. The curves may by modeled by at least one clothoid, preferably by more than one clothoid, as for example, by two clothoids, or by three clothoids or by four clothoids merged one to another.

Since well-designed and constructed roadways follow the clothoid model, numerical modeling and digital representation of real roads and streets by clothoids allow to obtain reliable and accurate information about the curve parameters as, in particular, curvature of the curves to be passed by the vehicle. Other curve parameters that can be determined include the arc length, radius, tangent angle and Cartesian coordinates of a curve.

Thus, an improved accuracy and a more realistic graphical representation of roads, rivers etc. are possible by digitally composing the cartographic features by means of clothoids. In Germany, for example, since 1984 streets and roads are to be designed and constructed by means of clothoids.

Different from conventional methods based on discrete interpolation points the use of clothoids allows for a continuous calculation of the course of roads and streets. This information together with information about the current position of the vehicle as well as determined values for state parameters, provided by the curve warning means, allow for a reliable estimate whether or not the curve can be passed safely.

The state parameters mentioned above are typical driving and ambient parameters as, e.g., the acceleration of the vehicle and weather parameters. The state parameters, in general, are time-dependent, i.e. currently determined values for these parameters as well as future values estimated for the further forward path of the vehicle can be employed for the decision whether or not safe passage of a curve is possible. The determination of the at least one state parameter value may be carried out by simply receiving parameter values or by manipulating them by some mathematical operations.

According to one advantageous embodiment of the present invention the at least one state parameter may be based on at least one of the current velocity, an estimated future velocity, the current centrifugal acceleration and an estimated future centrifugal acceleration and the at least one predetermined limit parameter value is based on a predetermined velocity value and/or a predetermined centrifugal acceleration value.

One of the state parameters may be identical to the current velocity or the current centrifugal acceleration. Other state parameters may consist of combinations of parameters as the velocity and the centrifugal acceleration. The at least one predetermined limit parameter value may be identical to a predetermined velocity value or a predetermined value of the centrifugal acceleration.

It may be desirable that, if a predetermined velocity and/or centrifugal acceleration is exceeded and/or is estimated to be exceeded in the future, the curve warning means that is operatively connected with the navigation system will respond, i.e. it will output some warning to the driver. The predetermined velocity and the predetermined centrifugal acceleration may be less than or equal to the critical velocity and the critical centrifugal acceleration, respectively. The term "critical velocity" herein denotes the upper velocity limit that guarantees safe passage all along the curve. The term "critical centrifugal acceleration" herein denotes the upper centrifugal acceleration limit that guarantees safe passage all along the curve.

Preferably, the curve warning means and thereby the navigation system can be supplemented by a plurality of sensors and determination means. The more information is available for the curve warning means, the more reliable it should work.

Advantageously, the inventive navigation system can be supplemented by a yaw rate sensor, for example, a gyroscopic sensor. By such a sensor the angular velocity of the vehicle is measured. Information of this velocity component significantly improves the functionality and performance of the curve warning means.

Preferably, the navigation system may comprise a means for the determination of the centrifugal acceleration. Information about the centrifugal acceleration allows to estimate the associated centrifugal force that has to be compensated in order to safely pass the curve. Thus, information about the centrifugal acceleration will significantly improve the reliability of the curve warning means.

Furthermore, the navigation system may comprise an inclinometer. If such an instrument is used, information about the current cross slope of the road can be taken into account. This will improve the reliability of the curve warning means, since the balance of the mechanical forces acting on a vehicle in a curve depends on the cross slope.

Preferably, a paving sensor may be utilized by the curve warning means. If information about the paving is available, the definition of the predetermined or critical velocity can take into account the slip of the road.

Measurement of the current tread further improves the reliability of the curve warning means, since this profile of the tires partly determines the road adherence.

Advantageously, the navigation system can be supplemented by sensors for the weather conditions, for example, a wind gage and a hygrometer. Again, information about the weather conditions will significantly improve the reliability of the curve warning means, since cross winds and wet streets due to rain fall, e.g., influence the critical velocity not to be exceeded for a safe passage of the curve.

Thus, according to a preferred embodiment the inventive navigation system with an integrated curve warning means may comprise

a yaw rate sensor for determining at least one of a yaw rate, a means for determining the centrifugal acceleration, an inclinometer for determining the cross slope, a paving sensor for determining at least one paving parameter, a tread sensor for determining at least one tread parameter and sensors for the weather conditions for determining at least one weather parameter, wherein

the at least one state parameter is based on at least one of the yaw rate, the centrifugal acceleration, the cross slope, the at least one paving parameter, the at least one tread parameter and the at least one weather parameter, and wherein the at least one predetermined limit parameter value is based on at least one of a predetermined yaw rate value, a predetermined centrifugal acceleration value, a predetermined cross slope value, a predetermined value for the at least one paving parameter, a predetermined value for the at least one tread parameter and a predetermined value for the at least one weather parameter.

According to still another preferred embodiment of the invention the navigation system further may comprise an electronic stability program configured to output stability parameters, and wherein the at least one state parameter is based on at least one of the stability parameters and the at least one predetermined limit parameter value is based on a predetermined value of the at least one stability parameter. Typical stability parameters include the steering angle and the engine speed.

The data detected and used by the electronic stability program can be provided to the curve warning means thereby improving reducing the risk of skidding significantly. In addition, it may be advantageous to transmit data sampled and evaluated by the curve warning system to the electronic stability program to improve performance thereof.

Preferably the navigation system according to the present invention also may comprise means configured to determine the curve parameters, in particular, the curvature, of a curve approached and/or passed by the vehicle and to provide these parameters to the warning means. The determination of the curve parameters is preferably be based on a clothoid model of the approached curve and can be done on the basis of a subset of all relevant curve parameters, comprising the clothoid parameter $A$, and is performed desirably almost in real time, which is possible, since the calculation can be performed numerically in a relatively simple way.

Alternatively, all relevant curve parameters might be stored in the map database. In this case less calculation is needed. However, the load of the CPU may not be reduced significantly, since the curve parameters must be completely downloaded and stored.

Furthermore, the inventive navigation system with an integrated curve warning means may advantageously also comprise a means configured to automatically adjust the velocity of the vehicle, if the at least one state parameter value exceeds a predetermined limit parameter value.

For example, the velocity of the vehicle may automatically be adjusted, if the critical velocity that guarantees safe passage of the curve is exceeded or is estimated to be exceeded in the future. If the driver does not react on the warnings output by the curve warning means it may be desirable to have the warning means control the velocity of the vehicle thereby reducing or even eliminating the risk of not passing a curve safely. Advantageously, some vehicle speed control means can comprise auto-cruising and brake means. This feature is rather directive, but could be regarded as helpful, in particular, in bad weather conditions and for beginners.

Furthermore, the curve warning means may be configured to be adapted to a driver's individual driving qualities and/or preferences. Also, the curve warning means may comprise an intelligent data processing device, in particular, a neural network, configured to be adapted to a driver's individual driving qualities and/or preferences.

The predetermined limit parameter values can be predetermined on the basis of driver's individual driving qualities and/or preferences. The individual adaptation of the curve warning system highly improves the comfort and presumably also the principal acceptance by the driver. Different individual warning profiles for different drivers may be learned and stored by the inventive navigation system with an integrated curve warning means.

According to a further preferred embodiment different levels of warning sensibility can be provided by the curve warning means and can be chosen from by the driver. A suitable choice may depend on the current driving conditions, as e.g., bad weather conditions, unknown roads, darkness and traffic density.

The present invention also provides a method for curve warning by a navigation system of a vehicle, comprising a database comprising clothoid models of curves of a digital map, comprising the steps of:

determining the current position;

determining the current velocity;

determining at least one state parameter value;

outputting an acoustical and/or optical and/or haptic warning on the basis of information about the current position and velocity of the vehicle and one of the clothoid models of curves of a digital map, if the at least one state parameter value exceeds at least one predetermined limit parameter value.

According to one embodiment of the inventive method the at least one state parameter can be based on at least one of the current velocity, an estimated future velocity, the current centrifugal acceleration and an estimated future centrifugal acceleration, and the at least one predetermined limit parameter value is based on a predetermined velocity value and/or a predetermined centrifugal acceleration value.

The inventive method may further comprise determining at least one of a yaw rate, the centrifugal acceleration, the cross slope, at least one paving parameter, at least one tread parameter and at least one weather parameter, and wherein the at least one state parameter is based on at least one of the yaw rate, the centrifugal acceleration, the cross slope, the at least one paving parameter, the at least one tread parameter and the at least one weather parameter, and wherein the at least one predetermined limit parameter value is based on at least one of a predetermined yaw rate value, a predetermined centrifugal acceleration value, a predetermined cross slope value, a predetermined value for the at least one paving parameter, a predetermined value for the at least one tread parameter and a predetermined value for the at least one weather parameter.

An electronic stability program may also be employed that is configured to output stability parameters, and wherein the at least one state parameter is based on at least one of the stability parameters and the at least one predetermined limit parameter value is based on a predetermined value of the at least one stability parameters.

Advantageously, the curve parameters, in particular, the curvature, of a curve approached and/or passed by a vehicle can be determined on the basis of the clothoid models of curves and to provide the curve parameters to the curve warning means.

Moreover, the inventive method may comprise the step of automatically adjusting the velocity of the vehicle, if the at least one state parameter value exceeds a predetermined limit parameter value.

The curve warning means may preferably be adapted to a driver's individual driving qualities and/or preferences. In this context the employed curve warning system may provide an intelligent data processing device, in particular, a neural network, and can be adapted to a driver's individual driving qualities and/or preferences by means of the intelligent data processing device

According to another embodiment of the inventive method for curve warning, different levels of warning sensibility can be provided by the curve warning means and can be chosen from by the driver and wherein the predetermined limit parameter values are predetermined on the basis of the level of warning sensibility.

The present invention also provides a computer program product, comprising one or more computer readable media having computer-executable instructions for performing the steps of the inventive method described above.

Additional features and advantages of the invention will be described with reference to the drawings. In the description, reference is made to the accompanying figures that are meant to illustrate preferred embodiments of the invention. It is understood that such embodiments do not represent the full scope of the invention.

Figure 1 shows a typical situation of a vehicle approaching and passing a curve.

Figure 2 illustrates the continuous matching of straight lines and a circle by means of clothoids.

Figure 3 shows a block diagram of the basic operation units according to an embodiment of the present invention.

Figure 4 shows a flow chart of the operation of the integrated curve warning means of a preferable embodiment of the present invention.

Figure 5 shows a flow chart of the operation of the integrated curve warning means of another preferable embodiment of the present invention.

Figure 6 shows a block diagram of the operation units according to a preferable embodiment of the present inventive navigation system with an integrated curve warning means.

Figure 7 illustrates the balance of mechanical forces acting on a vehicle when passing a curve.

Figure 8 shows a flow chart of the operation of an embodiment of the present invention characterized by means for driver identification and different levels of warning sensibility.

Similar elements in different Figures have been given the same reference numeral for purposes of consistency and simplicity.

The present invention relates to a navigation system with an integrated warning means that issues a warning, if the current velocity of the vehicle is too high to guarantee safe passage of a curve.

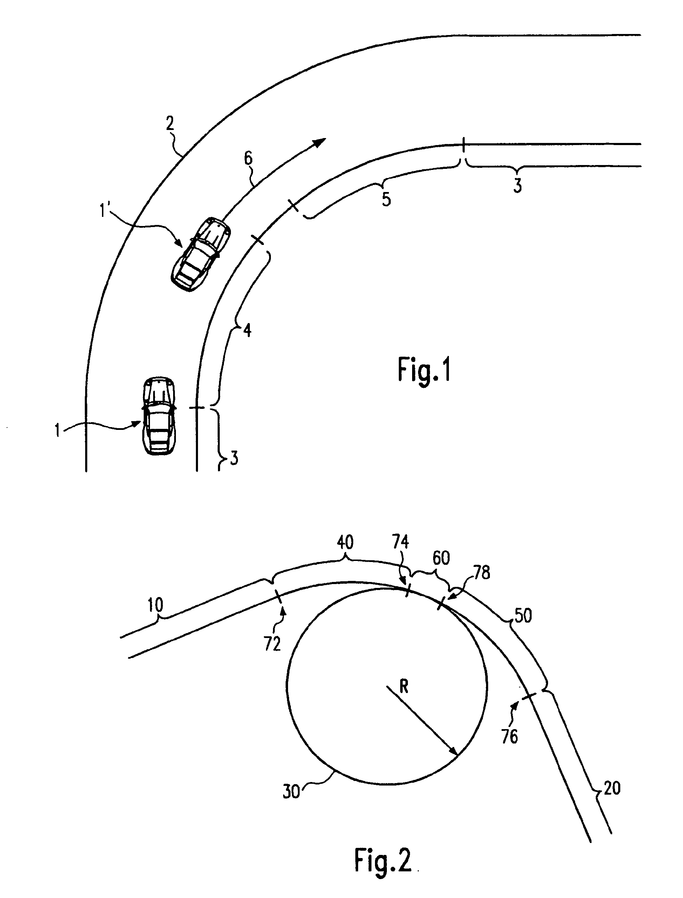

Figure 1 shows a typical situation in which a vehicle 1 is approaching a curve 2. If the curve has been constructed on the grounds of the clothoid model, the straight sections of the road 3 are matched to clothoid curves 4 and 5.

Clothoids belong to the class of geometric curves called cycloids. The characterizing feature of clothoids is the proportionality of curvature C to arc length L: $C = L / A^2$ (where A is the clothoid parameter). Due to this feature a continuous transition from straight lines without curvature to circles with a finite curvature $C = 1 / R$ (where R denotes the radius of curvature) can be provided by clothoids.

To illustrate this further with the help of Figure 1 we consider a vehicle 1' at some position $L_0$ within the curve. The vehicle is subject to a centrifugal acceleration that is proportional to the curvature. If the curvature at $L_0$ is known, the curvature and, provided that the velocity is almost constant, the centrifugal acceleration at some neighbored point $l$ along the forward path 6 of the vehicle can easily be calculated by a Taylor expansion

$$C(L_0 + l) = C_0 + l\left(\frac{dC}{dL}\right)_{L=L_0} = C_0 + \frac{l}{A^2}$$

that, in fact, is exact, since C is proportional to the arc length L. For a constant velocity of the vehicle the centrifugal acceleration is proportional to curvature and thereby the arc length.

Figure 2 illustrates the transition from straight lines 10 and 20 to a circle 30 by clothoids 40 and 50. The straight line 10 has to be continuously matched with a segment of the circle 60 with radius R.

First, the straight line 10 matches a clothoid 40 at some starting point 72 of the clothoid 40 characterized by C = 0. At the final point 74 of the clothoid 40 the curvature is C = 1 / R with R being the radius the given circle 30. This point 74 represents the transition point form the clothoid 40 to the circle 30 or to be more specific to the segment 60 of the circle 30. A straight line 20 at the opposite side of the circle may also be matched with the segment 60 of the circle 30 by means of a second clothoid 50. The respective transition points between the straight line 20 and the clothoid 50 and between the clothoid 50 and the segment 60 of the circle 30 are denoted by 76 and 78, respectively. The result of both matching procedures represents a continuous approximately 90° curve that can be smoothly passed without any necessity of abrupt steering and/or braking.

In Cartesian coordinates the parameter representation of clothoids reads $x = \int \cos t dL$ and $y = \int \sin t dL$ with the tangent angle t = $L^2$ / 2 $A^2$. Solutions of these so-called Fresnel integrals are obtained by numerical integration or, preferably, by expansion of the trigonometric functions in power series:

$$x = L - \frac{L^5}{40A^4} + \frac{L^9}{3456A^8} - \frac{L^{13}}{599040A^{12}} \pm .. \text{ and } y = \frac{L^3}{6A^2} - \frac{L^7}{336A^6} + \frac{L^{11}}{42240A^{10}} \mp ..$$

As shown in the examples in Figure 1 and 2 usually only small fractions of clothoids far away from their asymptotic points $x_{L \to \infty} = y_{L \to \infty} \sim$ A with R = 0 are to be considered in road construction.

All possible clothoids are similar to each other. The clothoid with A=1 is called the unity clothoid. If all the parameters relevant for the construction of a unity clothoid are know, these parameters, i.e. R, L, C, t, can be calculated for an arbitrary clothoid by simple multiplication with A. This leads to the compilation of tables of the parameters used in clothoid modeling. Nowadays, rather than the usage of such tables direct calculations of the x- and y-coordinates by means of the power series are performed.

Based on the above discussed geometric properties of clothoids these geometric curves are used for the representation of real curves in digital maps and this rather detailed information about the curve parameters, in particular, the curvature are used by the curve warning means of the navigation system according to the present invention.

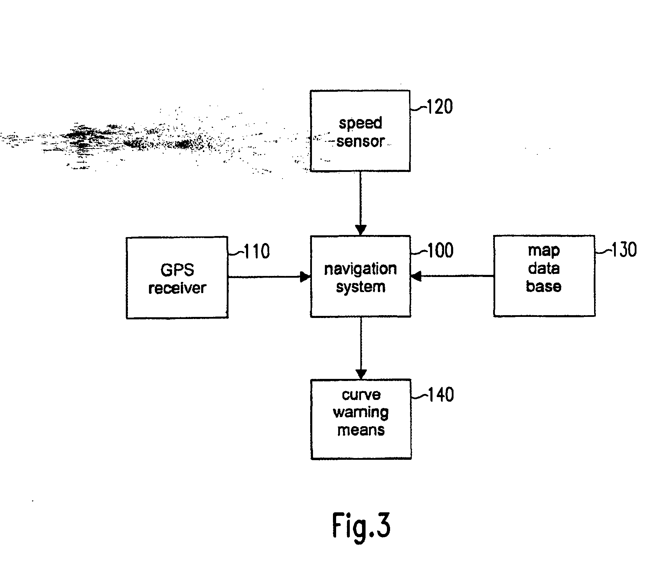

Figure 3 shows a block diagram of the basic operation of the principle embodiment of the present invention. A navigation system 100 for a vehicle receives and processes data coming from a GPS receiver 110, a velocity sensor 120 and a map database 130. On the basis of this data input and additional data provided by a gyroscope (not shown) the current position of the vehicle can be determined very accurately.

Curves are modeled and represented in the digital map of the map database 130 by means of clothoids. The information of curve parameters, in particular, the curvature provided by the map database can be used by the navigation system. Clothoid models of curves in the forward path of the vehicle and/or along the route to the destination chosen by the driver might by calculated offline and then stored in the map database for representation in the digital map. Alternatively, such a calculation may be performed by the navigation system 100, based on data provided by the map database 130. Further, it could be desirable to store the clothoid models in a separate clothoid database (not shown) with the data referentially linked to the data of the map database.

The velocity sensor 120 may, for example, may comprise ABS wheel sensors. The information of the digital map may or may not be output to a display device. The gyroscope may be a piezo sensor detecting crystal vibrating in one plane to measure rotation of the vehicle around an axis that is directed perpendicular to the road.

An integral part of the navigation system 100 is the curve warning means 140. The curve warning means 140 is provided with data by the navigation system 100. Comparison of the current velocity of the vehicle with, e.g., the critical velocity which must not be exceeded in order to guarantee safe passage of a curve in the forward path or of a curve that is just being passed by the vehicle is made possible on the grounds of the detailed information about the curve parameters. If the critical velocity is exceeded, the curve warning means 140 will provide the driver of the vehicle with a warning. Alternatively, the curve warning means may be configured to output a warning, if some predetermined velocity value below the critical velocity is exceeded.

The critical velocity can be calculated with reference to a critical limit for the centrifugal acceleration. In order to pass safely a curve the centrifugal acceleration $a_c = C\ v^2$ (where v denotes the velocity of the vehicle) must be compensated. In practice, the predetermined velocity used for the decision of the warning means whether or not to output a warning may be chosen and/or determined well-below the marginal velocity at which the centrifugal forces are compensated, i.e. the critical velocity. For example, the driver can choose some percentage of the evaluated "real" critical velocity as the predetermined velocity in practice.

The centrifugal force applied to the vehicle when passing a curve must be compensated by the frictional force that depends on the frictional coefficient. The frictional coefficient may be stored in the map database 130 for dry roads. Besides, the frictional coefficient it is highly desirable that other factors influencing the force balance, in particular, tread and weather conditions are taken into account as will be described later on.

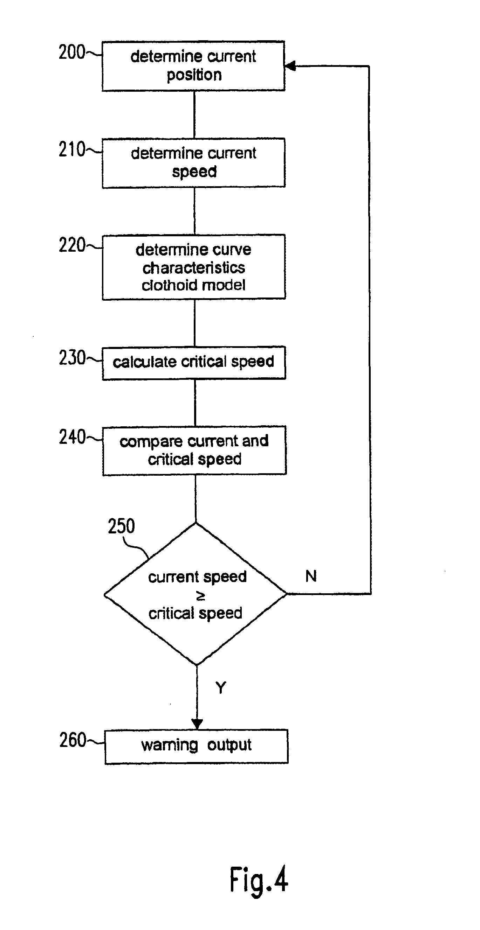

Figure 4 shows a flow chart that illustrates the operation of the integrated curve warning means according to one embodiment of the present invention. The current position of the vehicle is determined 200 by the navigation system. The current velocity is determined 210 as well. This can be done by a combination of motion data provided by motion sensors and map matching.

By means of the clothoid model the parameters of a curve approached by the vehicle are determined 220. It is to be understood that if the vehicle is currently passing through the curve, the same operation proceeds as described here. Next, the critical velocity is calculated 230 based on the clothoid representation of the curve. The critical velocity is the velocity that marginally allows for a safe passage of the curve. Again, it might be desirable to choose some velocity well-below the marginal velocity as the predetermined velocity above which the curve warning means outputs a warning.

The current velocity and the critical velocity are compared 240. If the current velocity exceeds the critical one 250, the curve warning means issues a warning 260. In the opposite case the curve warning means may or may not output any signal. An optical signal, for example, a green light may indicate that safe passage of the curve can be expected. The described operation proceeds continuously.

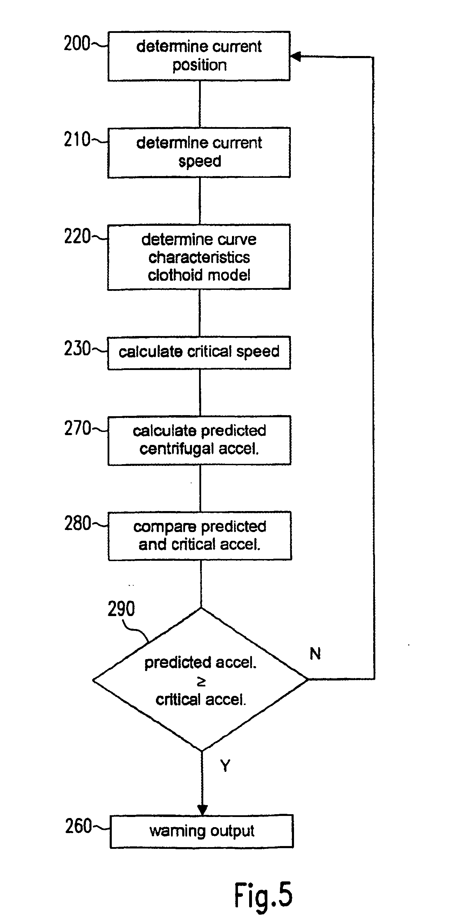

Figure 5 shows a flow chart that illustrates the operation of the integrated curve warning means of still another preferable embodiment of the inventive navigation system with an integrated curve warning means. As in the system described above the current position 200 as well as the current velocity 210 of the vehicle are determined. Again the parameters of a curve approached by the vehicle are determined 220 by means of the clothoid model and the critical velocity is calculated 230.

Under the assumption that the vehicle velocity will be kept almost constant when the vehicle passes the curve, the predicted centrifugal acceleration can be calculated 270 continuously all along the path of the vehicle through the curve. This again is made possible utilizing the clothoid model, which states that, for a constant velocity, the centrifugal force $a_c$ is proportional to the arc length of the curve, i.e. approximately the path length of the vehicle passing the curve. The constant of proportionality, here, is the inverse square of the clothoid parameter A.

The calculated predicted centrifugal acceleration will be compared to the critical centrifugal acceleration 280. This is the limit of the centrifugal acceleration that can be compensated by the static frictional force. A more elaborated embodiment of the present invention in which further impacts on the balance of the mechanical forces are taken into account will be described later on.

If the predicted centrifugal acceleration exceeds the critical centrifugal acceleration 290 the curve warning means issues a warning 260. The described operation proceeds continuously.

The embodiments of the inventive navigation system with an integrated curve warning described with the help of Figures 4 and 5 are not exclusive ones, but rather any combination of several features incorporated in them is regarded as being beneficial.

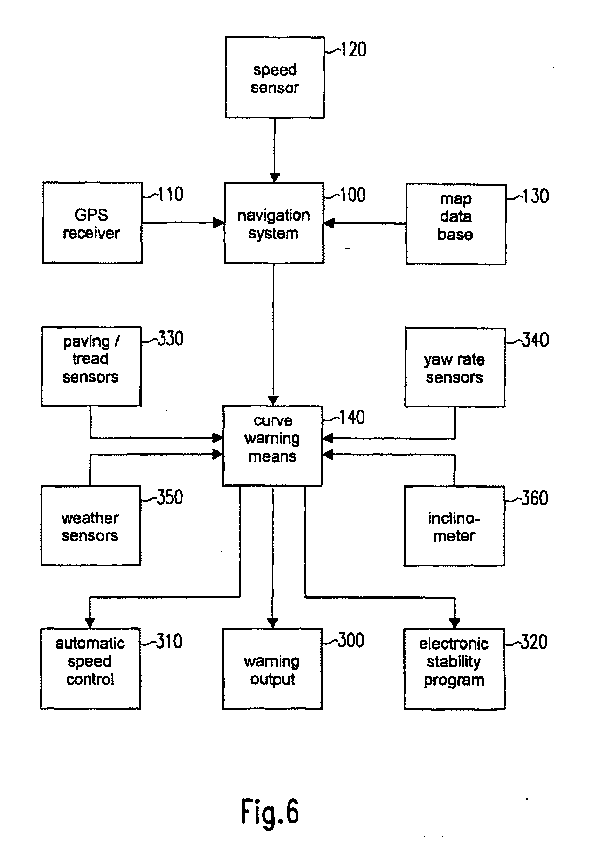

Figure 6 shows a rather elaborated advantageous embodiment of the present invention. If, on the basis of the data provided by the navigation system 100, the curve warning means 140 detects that an current velocity or predicted centrifugal acceleration exceeds the respective critical values, a warning is output 300 by the curve warning means 140.

The warning can be realized in several advantageous ways. Acoustical and/or optical warning outputs can be realized. The latter ones can comprise blinking lights, for example, of red color. Acoustical warnings can be sounds like buzzer sounds. Since navigation system usually comprise a synthesized voice, verbal warnings, for example "Reduce velocity!", can be realized. Moreover, in dependence on the level of the speeding acoustical, e.g. verbal, warnings can differ in volume.

In the inventive system illustrated in Figure 6, not only warnings can be issued but also an automatic speed control 310 is provided for improving the safety of the passengers of the vehicle. If the critical velocity and/or critical centrifugal acceleration are exceeded, the navigation system can control the engine and/or brake. Since such interference is rather restrictive, it should only be implemented with a manual switch-off. In bad weather conditions and during nightly cruising, however, such kind of an automatic speed control can prove helpful.

Another beneficial feature is an electronic stability program 320. The combination of a curve warning means 140 integrated in a navigation system 100 with an electronic stability program 320 significantly reduces the risk of skidding in curves. On the one hand, the electronic stability program 320 can provide the curve warning means 140 with state parameter that are used for a decision whether or not a warning should be output. On the other hand, the curve warning means 140 may advantageously contribute to the sensor information employed by the electronic stability program 320.

The more relevant information the curve warning means 140 can be provided with, the more reliable the curve warning means 140 is expected to work. Therefore, preferably different kinds of sensors provide the curve warning means 140 with state parameters in addition to the data stream coming from the navigation system 100 and which is based on the GPS receiver 110, the velocity sensor 120 and the map database 130. The advantageous embodiment of the inventive system as described with respect to Figure 6 comprises sensors for the paving and the tread 330, sensors for the yaw rate 340, weather sensors 350 as well as an inclinometer 360.

Sensors for the paving and for the tread 330 are useful for estimating the frictional coefficient that determines the frictional forces and thereby influences the balance of the mechanical forces. For example, an asphalt surface exhibits a different frictional coefficient than a cobblestone pavement. Also, a wet road has an adhesion different from a dry one.

Sensors for the yaw rate 340 are particular useful, since they allow to directly measure the transversal movement of the vehicle. The yaw rate may be determined by detecting the rotation velocity by oscillating a tuning fork for excitation and sensing the vibrations produced by the rotary motion using a tuning fork for detection. A rather high sensitivity can be achieved by employing the crystal piezoelectric effect.

In determining the current velocity as well as the yaw rate it may be preferable to utilize Kalman filters. The reason for this is that usually the measurements of the velocity and yaw rate by velocity and yaw rate sensors are a little noisy. Kalman filters represent state of the art methods to determine parameters of dynamic systems that are subject to white noise.

In this embodiment according to the invention, the operation of weather sensors 350 is intended. Similar to the sensors for the paving they can give information about the humidity which influences the frictional coefficient, i.e. the balance of the mechanical forces acting on the vehicle. Moreover, utilization of an anemometer is advantageous, since, in particular, crosswinds also have impact on the balance of forces.

Utilization of an inclinometer 360 is regarded to be particularly advantageous, since it allows to measure the cross slope of the road, which heavily affects the balance of forces.

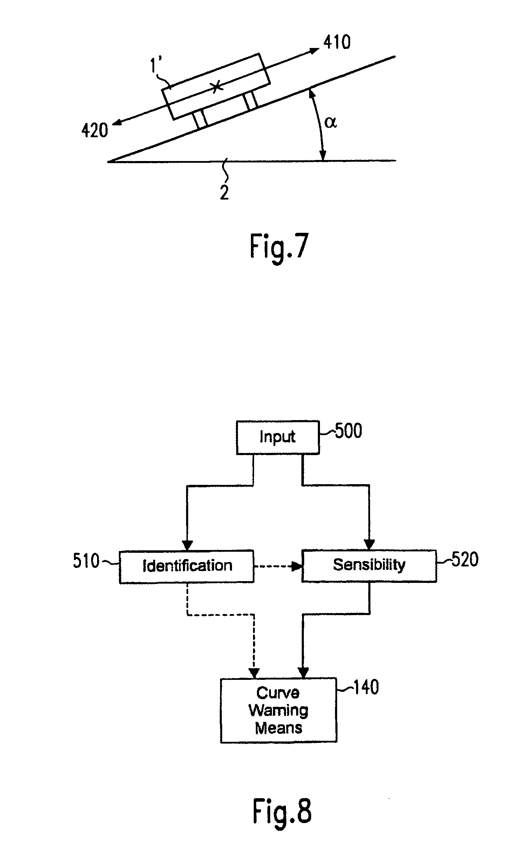

Figure 7 illustrates the impact of a finite slope measured by the inclination $\alpha$ on the balance of the mechanical forces 410 and 420 acting on the vehicle 1' that passes a curve 2. The centrifugal force is given by m C $v^2$ (where m denoted the mass of the vehicle) and has a component 410 parallel to the road of m C $v^2$ cos $\alpha$. On the other hand, the gravitational force has a component 420 that counteracts the centrifugal force: m g sin $\alpha$ (where g is the gravitational acceleration). Obviously, utilization of an inclinometer is helpful in estimating the balance of forces.

In still another advantageous embodiment of the inventive system, illustrated by Figure 8, a driver can identify himself 510 by means of the input device 500 of the navigation system and, thus, the curve warning means 140 can be adjusted to the driver's driving qualities and/or preferences. Alternatively, a driver may choose the desired sensibility 520 of the curve warning means by the input device 500. For example, on may choose from a High/Medium/Low alternative to cause the curve warning means to prompt a warning according to predetermined limit parameter values consisting of different ratios of the current velocity and the critical velocity and/or the predicted centrifugal acceleration and/or the critical centrifugal acceleration. In a further alternative realization of the inventive system the information about the identification 510 of the driver is used to automatically adjust the sensibility 520 of the curve warning means 140.

All previously discussed embodiments are not intended as limitations but serve as examples illustrating features and advantages of the invention. It is to be understood that some or all of the above described features can also be combined in different ways, but that the scope of the invention is defined by the appended claims.

**Claims**

1. A navigation system (100) for a vehicle comprising
   vehicle location means (110) for determining the current position;
   vehicle velocity determination means (120) for determining the current velocity;
   a database (130) comprising clothoid models of curves of a digital map; and
   a curve warning means (140) configured to determine at least one state parameter value of a state parameter that is based at least on the current velocity of the vehicle and to output acoustical and/or optical and/or haptic warnings on the basis of information about the current position and velocity of the vehicle and the clothoid models of curves represented in the database, if the at least one state parameter value exceeds a predetermined limit parameter value that is based on a predetermined velocity value that is calculated on the basis of a clothoid model of a curve comprised in the database.

2. A navigation system (100) for a vehicle comprising
   vehicle location means (110) for determining the current position;

vehicle velocity determination means (120) for determining the current velocity;

a database (130) comprising clothoid models of curves of a digital map; and

a curve warning means (140) configured to determine at least one state parameter value of a state parameter that is based at least on a future centrifugal acceleration of the vehicle estimated on the basis of a clothoid model of a curve comprised in the database and to output acoustical and/or optical and/or haptic warnings on the basis of information about the current position and velocity of the vehicle and the clothoid models of curves represented in the database, if the at least one state parameter value exceeds at least one predetermined limit parameter value that is based on a predetermined centrifugal acceleration value.

3. The navigation system according to Claim 1, wherein

the at least one state parameter is based on at least one of an estimated future velocity, the current centrifugal acceleration and an estimated future centrifugal acceleration, and

the at least one predetermined limit parameter value is based on a predetermined centrifugal acceleration value.

4. The navigation system according to Claim 2, wherein

the at least one state parameter is based on at least one of the current velocity, an estimated future velocity and the current centrifugal acceleration, and

the at least one predetermined limit parameter value is based on a predetermined velocity value.

5. The navigation system according to one of the preceding claims, further comprising

a yaw rate sensor for determining at least one of a yaw rate, a means for determining the centrifugal acceleration, an inclinometer for determining the cross slope, a paving sensor for determining at least one paving parameter, a tread sensor for determining at least one tread parameter and sensors for the weather conditions for determining at least one weather parameter, wherein

the at least one state parameter is based on at least one of the yaw rate, the centrifugal acceleration, the cross slope, the at least one paving parameter, the at least one tread parameter and the at least one weather parameter, and wherein

the at least one predetermined limit parameter value is based on at least one of a predetermined yaw rate value, a predetermined centrifugal acceleration value, a predetermined cross slope value, a predetermined value for the at least one paving parameter, a predetermined value for the at least one tread parameter and a predetermined value for the at least one weather parameter.

6. The navigation system according to one of the preceding claims, further comprising an electronic stability program configured to output stability parameters, and wherein the at least one state parameter is based on at least one of the stability parameters and the at least one predetermined limit parameter value is based on a predetermined value of the at least one stability parameter.

7. The navigation system according to one of the preceding claims, further comprising means configured to determine the curve parameters, in particular, the curvature, of a curve approached and/or passed by a vehicle on the basis of the clothoid models of curves and to provide the curve parameters to the curve warning means.

8. The navigation system according to one of the preceding claims, further comprising a means provided to automatically adjust the velocity of the vehicle, if the at least one state parameter value exceeds a predetermined limit parameter value.

9. The navigation system according to one of the preceding claims, wherein the curve warning means is configured to be adapted to a driver's individual driving qualities and/or preferences.

10. The navigation system according to one of the preceding claims, wherein the curve warning means comprises an intelligent data processing device, in particular, a neural network, configured to be adapted to a driver's individual driving qualities and/or preferences.

11. The navigation system according to one of the preceding claims, wherein the curve warning means is configured to provide different levels of warning sensibility that can be chosen from by the driver.

12. Method for curve warning by a navigation system of a vehicle, comprising a database comprising clothoid models of curves of a digital map, comprising the steps of:

determining the current position;
determining the current velocity;
determining at least one state parameter value;
outputting an acoustical and/or optical and/or haptic warning on the basis of information about the current position and velocity of the vehicle and one of the clothoid models of curves of a digital map, if the at least one state parameter value exceeds at least one predetermined limit parameter value;
wherein
the at least one state parameter value is based on at least the current velocity of the vehicle; and
the at least one predetermined limit parameter value is based on a predetermined velocity value that is calculated on the basis of a clothoid model of a curve comprised in the database.

13. Method for curve warning by a navigation system of a vehicle, comprising a database comprising clothoid models of curves of a digital map, comprising the steps of:

determining the current position;
determining the current velocity;
determining at least one state parameter value;
outputting an acoustical and/or optical and/or haptic warning on the basis of information about the current position and velocity of the vehicle and one of the clothoid models of curves of a digital map, if the at least one state parameter value exceeds at least one predetermined limit parameter value;
wherein
the at least one state parameter value is based at least on a future centrifugal acceleration of the vehicle estimated on the basis of a clothoid model of a curve comprised in the database; and
the at least one predetermined limit parameter value is based on a predetermined centrifugal acceleration value.

14. Method according to Claim 12, wherein
the at least one state parameter is based on at least one of an estimated future velocity, the current centrifugal acceleration and an estimated future centrifugal acceleration, and
the at least one predetermined limit parameter value is based on a predetermined centrifugal acceleration value.

15. Method according to Claim 13, wherein
the at least one state parameter is based on at least one of the current velocity, an estimated future velocity and the current centrifugal acceleration, and
the at least one predetermined limit parameter value is based on a predetermined velocity value.

16. Method according to one of the Claims 12-15, further comprising
determining at least one of a yaw rate, the centrifugal acceleration, the cross slope, at least one paving parameter, at least one tread parameter and at least one weather parameter, and wherein
the at least one state parameter is based on at least one of the yaw rate, the centrifugal acceleration, the cross slope, the at least one paving parameter, the at least one tread parameter and the at least one weather parameter, and wherein
the at least one predetermined limit parameter value is based on at least one of a predetermined yaw rate value, a predetermined centrifugal acceleration value, a predetermined cross slope value, a predetermined value for the at least one paving parameter, a predetermined value for the at least one tread parameter and a predetermined value for the at least one weather parameter.

17. Method according to one of the Claims 12-16. further providing an electronic stability program configured to output stability parameters, and wherein the at least one state parameter is based on at least one of the stability parameters and the at least one predetermined limit parameter value is based on a predetermined value of the at least one stability parameters.

18. Method according to one of the Claims 12 - 17, further determining the curve parameters, in particular, the curvature, of a curve approached and/or passed by a vehicle on the basis of the clothoid models of curves and to provide the curve parameters to the curve warning means.

19. Method according to one of the Claims 12 - 18, further comprising automatically adjusting the velocity of the vehicle, if the at least one state parameter value exceeds a predetermined limit parameter value.

**20.** Method according to one of the Claims 12 - 19, wherein the curve warning means can be adapted to a driver's individual driving qualities and/or preferences.

**21.** Method according to one of the Claims 12 - 20, wherein the curve warning means comprises an intelligent data processing device, in particular, a neural network, and can be adapted to a driver's individual driving qualities and/or preferences by means of the intelligent data processing device.

**22.** Method according to one of the Claims 12 - 21, wherein different levels of warning sensibility are provided by the curve warning means and can be chosen from by the driver and wherein the predetermined limit parameter values are predetermined on the basis of the level of warning sensibility.

**23.** Computer program product, comprising one or more computer readable media having computer-executable instructions for performing the steps of the method according to one of the Claims 12-22.

**Patentansprüche**

**1.** Ein Navigationssystem (100) für ein Fahrzeug, das umfasst
eine Fahrzeugpositionsbestimmungseinrichtung (110) zum Bestimmen der aktuellen Position;
eine Fahrzeuggeschwindigkeitsbestimmungseinrichtung (120) zum Bestimmen der aktuellen Geschwindigkeit;
eine Datenbank (130), die Klothoiden - Modelle von Kurven einer digitalen Karte umfasst; und
eine Kurvenwarneinrichtung (140), die dazu ausgebildet ist, zumindest einen Zustandsparameterwert eines Zustandsparameters zu bestimmen, der zumindest auf der aktuellen Geschwindigkeit des Fahrzeugs beruht, und akustische und/oder optische und/oder haptische Warnungen auf der Grundlage von Informationen über die aktuelle Position und Geschwindigkeit des Fahrzeugs und der Klothoiden - Modelle von Kurven, die in der Datenbank vorliegen, auszugeben, wenn der zumindest eine Zustandsparameterwert einen vorbestimmen Parametergrenzwert überschreitet, der auf einem vorbestimmten Geschwindigkeitswert beruht, der auf der Grundlage eines Klothoiden - Modells einer Kurve, das sich in der Datenbank befindet, berechnet wird.

**2.** Ein Navigationssystem (100) für ein Fahrzeug, das umfasst
eine Fahrzeugpositionsbestimmungseinrichtung (110) zum Bestimmen der aktuellen Position;
eine Fahrzeuggeschwindigkeitsbestimmungseinrichtung (120) zum Bestimmen der aktuellen Geschwindigkeit;
eine Datenbank (130), die Klothoiden - Modelle von Kurven einer digitalen Karte umfasst; und
eine Kurvenwarneinrichtung (140), die dazu ausgebildet ist, zumindest einen Zustandsparameterwert eines Zustandsparameters zu bestimmen, der zumindest auf einer zukünftigen Zentrifugalbeschleunigung des Fahrzeugs, wie sie auf der Grundlage eines Klothoiden - Modells einer Kurve, das in der Datenbank enthalten ist, geschätzt wird, und akustische und/oder optische und/oder haptische Warnungen auf der Grundlage von Informationen über die aktuelle Position und Geschwindigkeit des Fahrzeugs und der Klothoiden - Modelle von Kurven, die in der Datenbank vorliegen, auszugeben, wenn der zumindest eine Zustandsparameterwert zumindest einen vorbestimmen Parametergrenzwert überschreitet, der auf einem vorbestimmten Zentrifugalbeschleunigungswert beruht.

**3.** Das Navigationssystem gemäß Anspruch 1, in dem
der zumindest eine Zustandsparameter zumindest auf einem von einer geschätzten zukünftigen Geschwindigkeit, der aktuellen Zentrifugalbeschleunigung und einer geschätzten zukünftigen Zentrifugalbeschleunigung beruht, und
der zumindest eine vorbestimmte Parametergrenzwert auf einem vorbestimmten Zentrifugalbeschleunigungswert beruht.

**4.** Das Navigationssystem gemäß Anspruch 2, in dem
der zumindest eine Zustandsparameter zumindest auf einem von der aktuellen Geschwindigkeit, einer geschätzten zukünftigen Geschwindigkeit und der aktuellen Zentrifugalbeschleunigung beruht, und
der zumindest eine vorbestimmte Parametergrenzwert auf einem vorbestimmten Geschwindigkeitswert beruht.

**5.** Das Navigationssystem gemäß einem der vorhergehenden Ansprüche, das weiterhin umfasst
einen Gierratensensor zum Bestimmen zumindest einer Gierrate, eine Einrichtung zum Bestimmen der Zentrifugalbeschleunigung, einen Neigungsmesser zum Bestimmen der Straßenneigung, einen Straßenbelagsensor zum Bestimmen zumindest eines Straßenbelagparameters, einen Reifenprofilsensor zum Bestimmen zumindest eines Reifenprofilparameters und Sensoren für die Wetterbedingungen zum Bestimmen zumindest eines Wetterparameters, in dem

der zumindest eine Zustandsparameter auf zumindest einem von der Gierrate, der Zentrifugalbeschleunigung, der Straßenneigung, dem zumindest einen Straßenbelagparameter, dem zumindest einen Reifenprofilparameter und dem zumindest einen Wetterparameter beruht, und in dem

der zumindest eine vorbestimmte Parametergrenzwert auf zumindest einem von einem vorbestimmten Gierratenwert, einem vorbestimmten Zentrifugalbeschleunigungswert, einem vorbestimmten Straßenneigungswert, einem vorbestimmten Wert für den zumindest einen Straßenbelagparameter, einem vorbestimmten Wert für den zumindest einen Reifenprofilparameter und einem vorbestimmten Wert für den zumindest einen Wetterparameter beruht.

6. Das Navigationssystem gemäß einem der vorhergehenden Ansprüche, das weiterhin ein elektronisches Stabilisierungsprogramm umfasst, das dazu ausgebildet ist, Stabilitätsparameter auszugeben, und in dem der zumindest eine Zustandsparameter zumindest auf einem von den Stabilitätsparametern beruht, und der zumindest eine vorbestimmte Parametergrenzwert auf einem vorbestimmten Wert des zumindest einen Stabilitätsparameters beruht.

7. Das Navigationssystem gemäß einem der vorhergehenden Ansprüche, das weiterhin eine Einrichtung umfasst, die dazu ausgebildet ist, die Kurvenparameter, insbesondere die Krümmung, einer Kurve, der sich ein Fahrzeug nähert und/oder die es passiert, auf der Grundlage der Klothoiden - Modelle von Kurven zu bestimmen und die Kurvenparameter an die Kurvenwarneinrichtung zu liefern.

8. Das Navigationssystem gemäß einem der vorhergehenden Ansprüche, das weiterhin eine Einrichtung zum automatischen Anpassen der Geschwindigkeit des Fahrzeugs, wenn der zumindest eine Zustandsparameterwert einen vorbestimmten Parametergrenzwert überschreitet, umfasst.

9. Das Navigationssystem gemäß einem der vorhergehenden Ansprüche, in dem die Kurvenwarneinrichtung derart ausgebildet ist, dass sie an die individuellen Fahrqualitäten des Fahrers und/oder die Vorlieben des Fahrers angepasst werden kann.

10. Das Navigationssystem gemäß einem der vorhergehenden Ansprüche, in dem die Kurvenwarneinrichtung eine intelligente Datenverarbeitungseinrichtung, insbesondere ein neuronales Netzwerk, umfasst, die derart ausgebildet ist, dass sie an die individuellen Fahrqualitäten des Fahrers und/oder die Vorlieben des Fahrers angepasst werden kann.

11. Das Navigationssystem gemäß einem der vorhergehenden Ansprüche, in dem die Kurvenwarneinrichtung dazu ausgebildet ist, unterschiedliche Niveaus der Warnempfindlichkeit bereitzustellen, aus denen der Fahrer auswählen kann.

12. Verfahren zur Kurvenwarnung durch ein Navigationssystem eines Fahrzeugs, das eine Datenbank umfasst, die Klothoiden - Modelle von Kurven einer digitalen Karte umfasst, die Schritte umfassend:

Bestimmen der aktuellen Position;
Bestimmen der aktuellen Geschwindigkeit;
Bestimmen zumindest eines Zustandsparameterwerts;
Ausgeben einer akustischen und/oder optischen und/oder haptischen Warnung auf der Grundlage von Informationen über die aktuelle Position und Geschwindigkeit des Fahrzeugs und eines der Klothoiden - Modelle von Kurven von einer digitalen Karte, wenn der zumindest eine Zustandsparameterwert zumindest einen vorbestimmen Parametergrenzwert überschreitet;
in dem
der zumindest eine Zustandsparameterwert zumindest auf der aktuellen Geschwindigkeit des Fahrzeugs beruht; und
der zumindest eine vorbestimme Parametergrenzwert auf einem vorbestimmten Geschwindigkeitswert beruht, der auf der Grundlage eines Klothoiden - Modells einer Kurve, das sich in der Datenbank befindet, berechnet wird.

13. Verfahren zur Kurvenwarnung durch ein Navigationssystem eines Fahrzeugs, das eine Datenbank umfasst, die Klothoiden - Modelle von Kurven einer digitalen Karte umfasst, die Schritte umfassend:

Bestimmen der aktuellen Position;
Bestimmen der aktuellen Geschwindigkeit;
Bestimmen zumindest eines Zustandsparameterwerts;
Ausgeben einer akustischen und/oder optischen und/oder haptischen Warnung auf der Grundlage von Informationen über die aktuelle Position und Geschwindigkeit des Fahrzeugs und eines der Klothoiden - Modelle von Kurven von einer digitalen Karte, wenn der zumindest eine Zustandsparameterwert zumindest einen vorbestimmen Parametergrenzwert überschreitet;

in dem

der zumindest eine Zustandsparameterwert zumindest auf einer zukünftigen Zentrifugalbeschleunigung des Fahrzeugs beruht, die auf der Grundlage eines Klothoiden - Modells einer Kurve, das in der Datenbank vorliegt, geschätzt wird; und

der zumindest eine vorbestimme Parametergrenzwert auf einem vorbestimmten Zentrifugalbeschleunigungswert beruht.

14. Verfahren gemäß Anspruch 12, in dem

der zumindest eine Zustandsparameter zumindest auf einem von einer geschätzten zukünftigen Geschwindigkeit, der aktuellen Zentrifugalbeschleunigung und einer geschätzten zukünftigen Zentrifugalbeschleunigung beruht, und der zumindest eine vorbestimmte Parametergrenzwert auf einem vorbestimmten Zentrifugalbeschleunigungswert beruht.

15. Verfahren gemäß Anspruch 13, in dem

der zumindest eine Zustandsparameter zumindest auf einem von der aktuellen Geschwindigkeit, einer geschätzten zukünftigen Geschwindigkeit und der aktuellen Zentrifugalbeschleunigung beruht, und der zumindest eine vorbestimmte Parametergrenzwert auf einem vorbestimmten Geschwindigkeitswert beruht.

16. Verfahren gemäß einem der Ansprüche 12-15, das weiterhin umfasst

Bestimmen zumindest von einem von einer Gierrate, der Zentrifugalbeschleunigung, der Straßenneigung, zumindest eines Straßenbelagparameters, zumindest eines Reifenprofilparameters und zumindest eines Wetterparameters, und in dem

der zumindest eine Zustandsparameter auf zumindest einem von der Gierrate, der Zentrifugalbeschleunigung, der Straßenneigung, dem zumindest einen Straßenbelagparameter, dem zumindest einen Reifenprofilparameter und dem zumindest einen Wetterparameter beruht, und in dem

der zumindest eine vorbestimmte Parametergrenzwert auf zumindest einem von einem vorbestimmten Gierratenwert, einem vorbestimmten Zentrifugalbeschleunigungswert, einem vorbestimmten Straßenneigungswert, einem vorbestimmten Wert für den zumindest einen Straßenbelagparameter, einem vorbestimmten Wert für den zumindest einen Reifenprofilparameter und einem vorbestimmten Wert für den zumindest einen Wetterparameter beruht.

17. Verfahren gemäß einem der Ansprüche 12-16, das weiterhin ein elektronisches Stabilisierungsprogramm bereitstellt, das dazu ausgebildet ist, Stabilitätsparameter auszugeben, und in dem der zumindest eine Zustandsparameter zumindest auf einem von den Stabilitätsparametem beruht, und der zumindest eine vorbestimmte Parametergrenzwert auf einem vorbestimmten Wert des zumindest einen Stabilitätsparameter beruht.

18. Verfahren gemäß einem der Ansprüche 12-17, das weiterhin die Kurvenparameter, insbesondere die Krümmung, einer Kurve, der sich ein Fahrzeug nähert und/oder die es passiert, auf der Grundlage der Klothoiden - Modelle von Kurven bestimmt und die Kurvenparameter an die Kurvenwarneinrichtung liefert.

19. Verfahren gemäß einem der Ansprüche 12-18, das weiterhin das automatische Anpassen der Geschwindigkeit des Fahrzeugs umfasst, wenn der zumindest eine Zustandsparameterwert einen vorbestimmten Parametergrenzwerts überschreitet.

20. Verfahren gemäß einem der Ansprüche 12-19, in dem die Kurvenwarneinrichtung an die individuellen Fahrqualitäten und/oder die Vorlieben des Fahrers angepasst werden kann.

21. Verfahren gemäß einem der Ansprüche 12 - 20, in dem die Kurvenwarneinrichtung eine intelligente Datenverarbeitungseinrichtung, insbesondere ein neuronales Netzwerk, umfasst, und an die individuellen Fahrqualitäten und/oder die Vorlieben des Fahrers mithilfe der intelligenten Datenverarbeitungseinrichtung angepasst werden kann.

22. Verfahren gemäß einem der Ansprüche 12 - 21, in dem unterschiedliche Niveaus der Warnempfindlichkeit von der Kurvenwarneinrichtung bereitgestellt werden und von dem Fahren gewählt werden können, und in dem die vorbestimmten Parametergrenzwerte auf der Grundlage des Niveaus der Warnempfindlichkeit vorbestimmt werden.

23. Computerprogrammprodukt, das ein oder mehrere computerlesbaren Medien umfasst, die computerausführbare Anweisungen zum Ausführen der Schritte des Verfahrens gemäß einem der Ansprüche 12-22 aufweisen.

**Revendications**

1. Système de navigation (100) pour véhicule comprenant
   un moyen de localisation (110) de véhicule destiné à déterminer la position actuelle ;
   un moyen de détermination de la vélocité du véhicule (120) destiné à déterminer la vélocité actuelle ;
   une base de données (130) comprenant des modèles clothoïdes de virages d'une carte numérique ; et
   un moyen d'avertissement de virage (140) configuré pour déterminer au moins une valeur de paramètre d'état d'un paramètre d'état qui est basé au moins sur la vélocité actuelle du véhicule et pour sortir des avertissements acoustiques et/ou optiques et/ou tactiles sur la base des informations relatives à la position et la vélocité actuelles du véhicule et des modèles clothoïdes de virages représentés dans la base de données, si la au moins une valeur de paramètre d'état dépasse une valeur de paramètre limite prédéterminée qui est basée sur une valeur de vélocité prédéterminée qui est calculée sur la base d'un modèle clothoïde d'un virage compris dans la base de données.

2. Système de navigation (100) pour véhicule comprenant :

   un moyen de localisation de véhicule (110) destiné à déterminer la position actuelle ;
   un moyen de détermination de la vélocité du véhicule (120) destiné à déterminer la vélocité actuelle ;
   une base de données (130) comprenant des modèles clothoïdes de virages d'une carte numérique ; et
   un moyen d'avertissement de virage (140) configuré pour déterminer au moins une valeur de paramètre d'état d'un paramètre d'état qui est basé au moins sur une accélération centrifuge à venir du véhicule estimée sur la base d'un modèle clothoïde d'un virage compris dans la base de données et pour sortir les avertissements acoustiques et/ou optiques et/ou tactiles sur la base des informations relatives à la position et la vélocité actuelles du véhicule et des modèles clothoïdes de virages représentés dans la base de données, si la au moins une valeur de paramètre d'état dépasse au moins une valeur de paramètre limite prédéterminée qui est basée sur une valeur d'accélération centrifuge prédéterminée.

3. Système de navigation selon la revendication 1, dans lequel
   le au moins un paramètre d'état est basé sur au moins une valeur parmi une vélocité à venir estimée, l'accélération centrifuge actuelle et une accélération centrifuge à venir estimée, et
   la au moins une valeur de paramètre prédéterminée est basée sur une valeur d'accélération centrifuge prédéterminée.

4. Système de navigation selon la revendication 2, dans lequel
   le au moins un paramètre d'état est basé sur au moins une valeur parmi la vélocité actuelle, une vélocité à venir estimée et l'accélération centrifuge actuelle, et
   la au moins une valeur de paramètre limite prédéterminée est basée sur une valeur de vélocité prédéterminée.

5. Système de navigation selon l'une quelconque des revendications précédentes, comprenant en outre
   un capteur de mouvement de lacet destiné à déterminer au moins un mouvement de lacet, un moyen de détermination de l'accélération centrifuge, un inclinomètre destiné à déterminer la pente transversale, un capteur de pavage destiné à déterminer au moins un paramètre de pavage, un capteur de bande de roulement destiné à déterminer au moins un paramètre de bande de roulement et des capteurs pour les conditions météorologiques destinés à déterminer au moins un paramètre météorologique, dans lequel
   le au moins un paramètre d'état est basé sur au moins une valeur parmi le mouvement de lacet, l'accélération centrifuge, la pente transversale, le au moins un paramètre de pavage, le au moins un paramètre de pente de roulement et le au moins un paramètre météorologique, et dans lequel
   la au moins une valeur de paramètre limite prédéterminée est basée sur au moins une parmi une valeur de mouvement de lacet prédéterminée, une valeur d'accélération centrifuge prédéterminée, une valeur de pente transversale prédéterminée, une valeur prédéterminée pour le au moins un paramètre de pavage, une valeur prédéterminée pour le au moins un paramètre de bande de roulement et une valeur prédéterminée pour le au moins un paramètre météorologique.

6. Système de navigation selon l'une quelconque des revendications précédentes, comprenant en outre un programme de stabilité électronique configuré de façon à sortir les paramètres de stabilité, et dans lequel le au moins un paramètre d'état est basé sur au moins l'un des paramètres de stabilité et la au moins une valeur de paramètre limite prédéterminée est basée sur une valeur prédéterminée du au moins un paramètre de stabilité.

7. Système de navigation selon l'une quelconque des revendications précédentes, comprenant en outre un moyen configuré de façon à déterminer les paramètres de virage, en particulier, la courbure, d'un virage en approche et/ou dépassé par un véhicule sur la base des modèles clothoïdes de virages et pour fournir les paramètres de virage au moyen d'avertissement de virage.

8. Système de navigation selon l'une quelconque des revendications précédentes, comprenant en outre un moyen prévu pour ajuster automatiquement la vélocité du véhicule, si la au moins une valeur de paramètre d'état dépasse une valeur de paramètre limite prédéterminée.

9. Système de navigation selon l'une quelconque des revendications précédentes, dans lequel le moyen d'avertissement de virage est configuré de façon à être adapté aux qualités et/ou préférences individuelles de conduite d'un conducteur.

10. Système de navigation selon l'une quelconque des revendications précédentes, dans lequel le moyen d'avertissement de courbe comprend un dispositif intelligent de traitement de données, en particulier, un réseau neuronal, configuré de façon à être adapté aux qualités et/ou préférences individuelles de conduite d'un conducteur.

11. Système de navigation selon l'une quelconque des revendications précédentes, dans lequel le moyen d'avertissement de virage est configuré de façon à fournir différents niveaux de sensibilité d'avertissement qui peuvent être choisis par le conducteur.

12. Procédé d'avertissement de virage par un système de navigation pour véhicule, comprenant une base de données comprenant des modèles clothoïdes de virages ou carte numérique, comprenant les étapes consistant à:

   déterminer la position actuelle ;
   déterminer la vélocité actuelle ;
   déterminer au moins une valeur de paramètre d'état ;
   sortir un avertissement acoustique et/ou optique et/ou tactile sur la base des informations relatives à la position et la vélocité actuelles du véhicule et l'un des modèles clothoïdes de virages d'une carte numérique, si au moins une valeur des paramètres d'état dépasse au moins une valeur de paramètre limite prédéterminée ;
   dans lequel
   la au moins une valeur de paramètre d'état est basée sur au moins la vélocité actuelle du véhicule ; et
   la au moins une valeur de paramètre limite prédéterminée est basée sur une valeur de vélocité prédéterminée qui est calculée sur la base d'un modèle clothoïde d'un virage compris dans la base de données.

13. Procédé d'avertissement de virage par un système de navigation pour véhicule, comprenant une base de données comprenant des modèles clothoïdes de virages d'une carte numérique, comprenant les étapes consistant à déterminer la position actuelle ;
   déterminer la vélocité actuelle ;
   déterminer au moins une valeur de paramètre d'état ;
   sortir un avertissement acoustique et/ou optique et/ou tactile sur la base des informations relatives à la position et la vélocité actuelles du véhicule et l'un des modèles clothoïdes de virages d'une carte numérique, si la au moins une valeur de paramètre d'état dépasse au moins une valeur de paramètre limite prédéterminée ;
   dans lequel
   la au moins une valeur de paramètre d'état est basée au moins sur une accélération centrifuge à venir du véhicule estimée sur la base d'un modèle clothoïde d'un virage compris dans la base de données ; et
   la au moins une valeur de paramètre limite prédéterminée est basée sur une valeur d'accélération centrifuge prédéterminée.

14. Procédé selon la revendication 12, dans lequel
   le au moins un paramètre d'état est basé sur au moins une valeur parmi une vélocité à venir estimée, l'accélération centrifuge actuelle et une accélération centrifuge à venir estimée, et
   la au moins une valeur de paramètre limite prédéterminée est basée sur une valeur d'accélération centrifuge prédéterminée.

15. Procédé selon la revendication 13, dans lequel

le au moins un paramètre est basé sur au moins une valeur parmi la vélocité actuelle, une vélocité à venir estimée et l'accélération centrifuge actuelle, et
la au moins une valeur de paramètre limite prédéterminée est basée sur une valeur de vélocité prédéterminée.

16. Procédé selon l'une quelconque des revendications 12 à 15, comprenant en outre l'étape consistant à déterminer au moins une valeur parmi un mouvement de lacet, l'accélération centrifuge, la pente transversale, au moins un paramètre de pavage, au moins un paramètre de bande de roulement et au moins un paramètre météorologique, et dans lequel
le au moins un paramètre d'état est basé sur au moins une valeur parmi le mouvement de lacet, l'accélération centrifuge, la pente transversale, le au moins un paramètre de pavage, le au moins un paramètre de pente de roulement et le au moins un paramètre météorologique, et dans lequel
la au moins une valeur de paramètre limite prédéterminée est basée sur au moins une valeur parmi une valeur de mouvement de lacet prédéterminée, une valeur d'accélération centrifuge prédéterminée, une valeur de pente transversale prédéterminée, une valeur prédéterminée pour le au moins un paramètre de pavage, une valeur prédéterminée pour le au moins un paramètre de bande de roulement et une valeur prédéterminée pour le au moins un paramètre météorologique.

17. Procédé selon l'une quelconque des revendications 12 à 16, prévoyant en outre un programme de stabilité électronique configuré de façon à sortir les paramètres de stabilité, et dans lequel le au moins un paramètre d'état est basé sur au moins l'un des paramètres de stabilité et la au moins une valeur de paramètre limite prédéterminée est basée sur une valeur prédéterminée du au moins un paramètre de stabilité.

18. Procédé selon l'une quelconque des revendications 12 à 17, déterminant en outre les paramètres de virage, en particulier, la courbure, d'un virage en approche et/ou dépassé par un véhicule sur la base des modèles clothoïdes de virages et pour fournir les paramètres de virage au moyen d'avertissement de virage.

19. Procédé selon l'une quelconque des revendications 12 à 18, comprenant en outre l'étape consistant à ajuster automatiquement la vélocité du véhicule, si au moins une valeur de paramètre d'état dépasse une valeur de paramètre limite prédéterminée.

20. Procédé selon l'une quelconque des revendications 12 à 19, dans lequel le moyen d'avertissement de virage peut être adapté aux qualités et/ou préférences individuelles de conduite d'un conducteur.

21. Procédé selon l'une quelconque des revendications 12 à 20, dans lequel le moyen d'avertissement de virage comprend un dispositif intelligent de traitement de données, en particulier, un réseau neuronal, et peut être adapté aux qualités et/ou préférences individuelles de conduite d'un conducteur au moyen du dispositif intelligent de traitement de données.

22. Procédé selon l'une quelconque des revendications 12 à 21, dans lequel différents niveaux de sensibilité d'avertissement sont fournis par le moyen d'avertissement de virage et peuvent être choisis par le conducteur et dans lequel les valeurs de paramètre limite prédéterminées sont prédéterminées sur la base du niveau de sensibilité d'avertissement.

23. Produit de programme informatique comprenant un ou plusieurs supports lisibles par un ordinateur ayant des instructions exécutables par un ordinateur pour accomplir les étapes du procédé selon l'une quelconque des revendications 12 à 22.

## Fig.1

## Fig.2

Fig.3

200~ determine current
position

210~ determine current
speed

220~ determine curve
characteristics
clothoid model

230~ calculate critical speed

240~ compare current and
critical speed

250

current speed
≥
critical speed

N

Y

260~ warning output

Fig.4

Fig.5

Fig.6

21

410

1'

420

α

2

Fig.7

Input ⎤500

510⎤ Identification → Sensibility ⎤520

Curve
Warning
Means ⎤140

Fig.8

**EP 1 659 367 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5661650 A
- US 6092014 A
- US 6141617 A
- DE 10244329 A1